# EUROPEAN PATENT SPECIFICATION

(11) **EP 2 089 322 B1**
(45) Date of publication and mention of the grant of the patent: **15.09.2010**
(21) Application number: 07826973.5
(22) Date of filing: 05.11.2007
(51) Int. Cl.: C02F 1/00, C02F 1/32, B01D 27/08

(54) **WATER PURIFICATION DEVICE**
WASSERREINIGUNGSVORRICHTUNG
DISPOSITIF DE PURIFICATION D'EAU

(30) Priority: 07.11.2006 EP 06123619
(43) Date of publication of application: 19.08.2009
(73) Proprietor: Koninklijke Philips Electronics N.V., 5621 BA Eindhoven (NL)
(72) Inventor: BRUGGINK, Wilhelmus H. M., 5656 AE Eindhoven (NL); PAWAR, Narendra N., 5656 AE Eindhoven (NL)
(74) Representative: Uittenbogaard, Frank
(86) International application number: PCT/IB2007/054471
(87) International publication number: WO 2008/056311

(56) References cited:
- WO-A-99/10069
- WO-A-03/072220
- WO-A-2005/077490
- GB-A- 2 381 760
- US-A- 4 693 820
- US-A1- 2002 125 183
- US-A1- 2003 070 968
- US-A1- 2003 168 394
- US-A1- 2006 000 754

## Description

### FIELD OF THE INVENTION

The present invention relates to a water purification device.

Water purification devices are becoming more and more important to obtain safe drinking water. Water may contain many different kinds of contaminants, including for example, particulates, harmful chemicals and several types of microorganisms such as bacteria, parasites, cysts, and viruses. Any harmful contaminants must be removed from water before being suitable for safe consumption by human beings. The consequences associated with exposure to contaminated water may be very serious and even deadly, especially in less-developed countries where safe drinking water is not always available.

### BACKGROUND OF THE INVENTION

Numerous different types of water purification systems have been developed, based on one or more purification techniques, in order to make the water consumable by human beings. Well-known water purification techniques include distillation, boiling, chemical disinfection, reverse osmosis and filtration of the water.

A water purification device that applies filtration of the water typically comprises a filter unit, which unit accommodates an active element that filters the water. The filter element needs regular replacement since it gradually gets clogged by particles. When replacing the filter element one generally opens a closure or cap of the filter unit in order to be able to remove and replace the filter element.

A problem with the water purification devices from the previous paragraph is that in general it is rather difficult to replace the filter element. The housing normally accommodates numerous components that occupy a lot of space. Consequently in the housing there is not much free space making it difficult to remove the cap from the filter unit. Sometimes it is even difficult to replace the filter element when there is sufficient space within the housing. This occurs when the water purification device is mounted in a room that is rather tight, e.g. due to many neigbouring devices. In that case there is not much space to manoeuvre around the water purification device itself. Water purification devices are typically located in a kitchen where there are a lot of other kitchen appliances, kitchen drawers, etc.

US 2003/0168394 A1 discloses a filter head assembly which is configured for connection to a water line, and which comprises at least two filter heads for treating water, wherein at least one of the filter heads accommodates a replaceable filter bowl. The assembly further includes at least one head housing having an inlet port, an outlet port, a central chamber in fluid communication with the ports and a bowl connection opening in fluid communication with the chamber. Each of the ports is pivotally connected to one of a tubular connector and an end plug fitting, so that the head housing can pivot relative to the respective connector and/or fitting. An advantage of this action of the head housing is that access to the bowl and/or the bowl connection opening is facilitated, regardless of the location of the assembly on a wall.

US 2006/0000754 A1 discloses a water shut-off device for a water purifier, comprising a connector mounted to a housing of a water purifier and a filter removably attached to the connector. The filter is an essential element of the device, which includes a filtering element that can purify raw water. The connector is mounted to the housing of the water purifier, while at the same time being arranged such as to be swingable about a pivot axis between a filter use position and a filter replacement position with respect to the housing of the water purifier. This helps assure easier replacement of the filter.

US 4,693,820 discloses a modular water conditioning apparatus comprising a filter assembly with a hollow cylindrical casing extending perpendicularly upwards from a cylindrical base section. The base section has coaxial inlet and outlet tubes disposed perpendicularly outwards from opposite cylindrical walls of the base section. Within the base section, a hollow cylindrical boss, coupled to the outlet pipe, extends upwards. Cylindrical filter elements contained within the casing of the filter assembly are held in position and forced into sealing contact with the outlet boss by a cup spring pressed down on the upper surface of the filter element by a cap screwed on the upper open end of the filter casing.

### SUMMARY OF THE INVENTION

The object of the present invention is to provide a water purification device, which solves or at least ameliorates the above-mentioned drawbacks of water purification devices.

For this purpose the present invention provides a water purification devices according to claim 1. When the filter element needs replacement one first moves the filter unit from the normal position to the maintenance position. With that the cap moves to a position wherein it is substantially outside the housing. This provides more space to remove the cap and access the filter element inside the filter unit. When the filter element is replaced one remounts the cap and moves the filter unit back to its normal operating position so the device is again ready for use. All these steps can be done manually and do not require any tools.

In an embodiment of the device the filter unit is pivotably arranged to the housing. A pivoting movement can be arranged relatively easily and is rather effective in freeing the cap from the housing. In a simple and practical embodiment the housing comprises a bracket while protrusions extending from the filter unit are provided, which protrusions are coupled to the bracket to pivot the filter unit.

In an embodiment of the device the filter unit has a first end and an opposite second end, and wherein the protrusions are provided at the first end and the cap is provided at the second end. This has the advantage that relatively little manoeuvring space is required in the housing to be able to tilt the filter unit.

In an embodiment of the device the filter unit is connected to the piping by means of flexible tubes and comprises an automatic shut off valve that shuts of the water supply to the filter unit when removing the filter element. This has the advantage that the water connections of the filter unit can move together with the unit without the need of having to disconnect the filter unit from the piping first when replacing the filter element.

In an embodiment of the device the housing comprises at least one panel for accessing the interior of the housing. This has the advantage that the parts inside the housing are normally protected from the outside environment. When these parts need servicing, such as the replacement of the filter element, they are accessed by opening the corresponding panel. Otherwise the housing would comprise openings that provide the required access to the parts inside the housing while continuously exposing them to the outside environment.

In an embodiment of the device the water purification means the water purification means comprise an UV chamber for irradiating the water with UV radiation, the UV chamber being provided upstream of the filter unit. Ultraviolet disinfection is a well-known means to prepare safe drinking water. Exposure of unpurified water to UV radiation will eliminate all living organisms in said water due to exposure of their DNA to UV radiation. The combination of a filter element and an upstream UV source has proven to filter and clean water very effectively.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a schematic drawing of a water purification device,
Fig. 2 shows a water purfication device in a front view,
Fig. 3 shows the main components for mounting and supporting the filter unit,
Fig. 4 shows a filter unit in exploded view.

In the Figures, elements which correspond to elements already described have the same reference numerals.

### DETAILED DESCRIPTION OF EMBODIMENTS

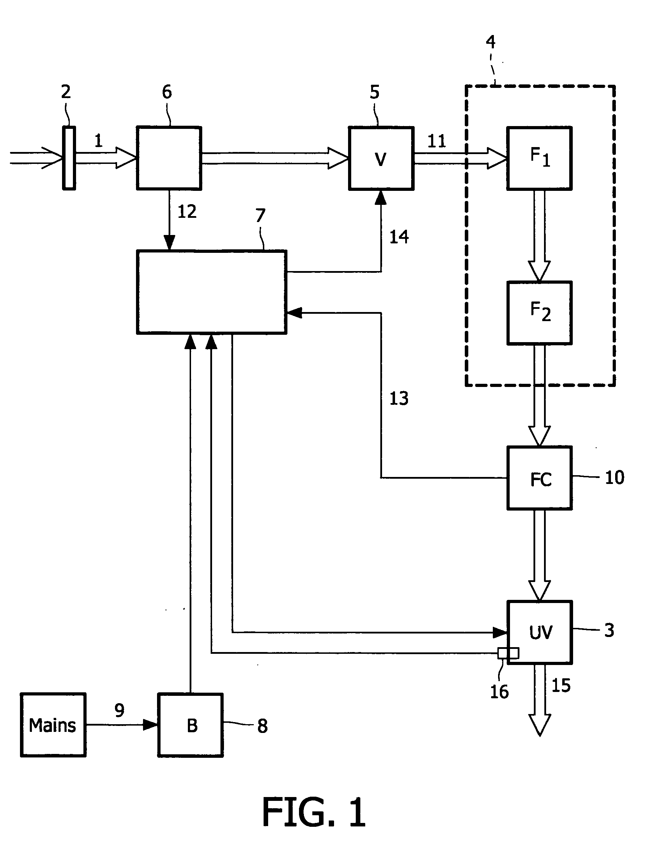

The water purification device shown in Fig. 1 generally is connected to a tap, which supplies contaminated water 1 to the device (i.e. fresh water that is not drinkable). The contaminated water 1 is introduced through inlet 2. Here it is assumed that the device according to the invention is used in countries where water from the water supply system is not directly potable, at least not without purifying it.

As schematically shown in Fig. 1, said inlet for contaminated water 2 is in fluid communication with a first filter F1, e.g. a sediment filter, and a second filter F2, e.g. an activated carbon filter F2 for removing e.g. chlorine, organic chemicals and lead from the water. Both filters are integrated in a customized filter unit 4. The filters have been provided "upstream from", i.e. "before" in the direction of the water flow, an UV chamber 3, having an UV lamp for elimination of microorganisms from the water by exposure to UV light. Thus, the filters may remove any contaminants that might impair effective UV disinfection.
As shown in Fig. 1, valve 5, e.g. a solenoid valve, controls the supply of contaminated water 11 to the filters F1 and F2.

The water 15 that exits the UV chamber 3 is purified, in the sense that it is safe for humans to drink the water, and can be dispensed for use. It should be understood that the device may comprise additional filters, e.g. to remove specific impurities that are unique to specific areas of the world, depending on where the device is used.

The autonomously functioning device according to the invention, as shown in Fig. 1, comprises a pressure switch 6, upstream from the valve 5, for determining the availability of contaminated water 1. The pressure switch 6 is electrically coupled to control means 7, which in response to a signal 12 from the pressure switch 6 switch on the UV lamp in the UV chamber 3. Said control means 7 may e.g. include a circuit board upon which several electronic components and circuitry are mounted. A delay element may for example allow the UV lamp to warm up to full power in the UV chamber ensuring that the water is irradiated with a sufficient dosage of UV light.

The device of the invention preferably also comprises a flow counter 10 for monitoring the quantity of water that has been purified by the filters. The flow counter may e.g. be a rotary van type electro-mechanical counter. Such flow counter makes a number of turns depending upon the amount of flow and hence generates the electric pulses, which are calibrated to the flow through the device. The flow counter 10 is electrically coupled 13, 14 through control means 7 to valve 5 for interrupting the supply of contaminated water if a preset amount of water has been purified by closing the valve 5. The cumulative data of the flow are stored in the artificial memory of the device and are used for determining whether a selected preset amount of water has been purified. Said preset amount of water may e.g. correspond to the volume of a storage vessel, which is to be used as an emergency supply of purified water.

After having purified said preset amount of water, the device may e.g. issue a signal (sound, and/or visual such as a text message on a display) indicating that said present amount of water has been purified.

With this device it is possible to use different types of storage vessels having different volumes, as the user can easily adjust the amount of water that is to be purified.

The data provided by the flow counter may furthermore be used for checking the expiry status of the filtering means, i.e. for checking whether the filtering means are still suitable for use or should be replaced. Alternatively, or in addition, the expiry status of the filtering means may be based on time. That is, the device may also stop the supply of water to the device and/or issue a signal to the user if a predetermined period of time has lapsed since the filter has been introduced in the device.

As stated above, the device is connected to the mains for electricity supply. As shown in Fig. 1, the device also comprises an integrated rechargeable battery 8, which may serve as a back-up system providing power in case the mains power supply 9 is interrupted. When mains power supply is interrupted, the battery 8 powers the device until mains electricity is available again. When mains power is available, the battery 8 will be recharged, such that the battery is stand-by for the next period wherein the electricity supply may be is interrupted. The device further may comprise conventional components such as transformers for converting e.g. 12-volt battery power in 120-260 V AC when necessary.

A light sensor 15 is provided having a measuring surface facing the UV lamp. The sensor measures the intensity of the UV lamp radiation and provides a corresponding output signal to the control unit. When this intensity drops below a certain level or the lamp does not function at all control means 7 closes valve 5 for interrupting the supply of contaminated water. Preferably a display also displays a warning signal.

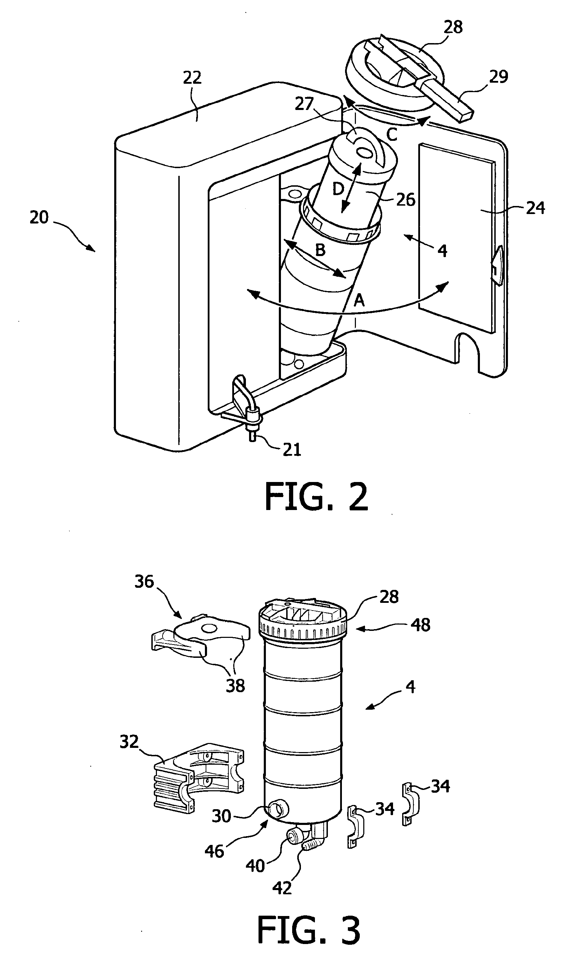

Figure 2 shows a water purfication device 20 having a housing 22 and a panel 24 that provides access to the interior of the housing. A filter unit 4 is displayed in its maintenance position. The filter unit 4 accommodates a filter element 26 which can be accessed by means of a cap 28, which preferably is a screw cap. The filter element 26 contains absorption means, such as an activated carbon filter and a sediment filter. The absorption means may comprise special filter elements that are adapted to filter specific substances that frequently show up in the water system in a certain area. The filter elements needs regular replacement due to clogging thereof. The device measures the total amount of water that has been filtered by means of flow counter 10. If a certain amount of water has been filtered a display (not shown) indicates that the filter element 26 needs replacement. Alternatively or additionally a timer can be provided that gives a warning signal and/or closes the solenoid valve 5 when a certain period has elapsed.

To replace the filter element one first opens the panel 24 in the direction indicated by arrow A. Next one tilts the filter unit 4 with relation to the housing in the direction indicated by arrow B. With this movement the filter unit moves from its normal position to a maintenance position while the cap 28 is moved to a position wherein it is located substantially outside the housing. With this it is meant that the filter unit is tilted to such an extent that is easy for a user to remove or unscrew the cap. In the next step the cap is removed by rotating it in the direction indicated by arrow C. In a final step one takes the filter element out and replaces it by a new element (movement indicated by arrow D). To make the device ready for use one repeats the previous steps in reverse order. A handle 27 is provided to facilitate the handling of the filter element.

It will be obvious that it is much easier to replace a filter element when the filter is in its maintenance position as compared to the filter unit being in its normal upright position.

A water outlet 21 for dispensing the purified water is provided at a lower part at the front of the device. A water inlet (not shown) is provided at the bottom part of the device, which water inlet is to be connected to a water supply such as a water tap supplying (contaminated) water. Preferably the water inlet comprises a course pre-filter, such as a pre-filter mesh for filtering the incoming water with relation to larger particles.

From the water inlet the water flows to the filter unit 4 at the right part of the housing (when viewed in front view). After flowing through the filter unit 4 the water flows to the UV chamber 3, which is accommodated in the left part of housing. After flowing through the UV chamber the purified water flows to the outlet 21.

Figure 3 shows an exploded view indicating the main components for mounting and supporting the filter unit 4 with relation to the housing. The filter unit 4 comprises two circular shaped projections 30, which extend on opposite sides from the filter unit. In Figure 3 only one projection can be seen. A bracket 32 is arranged within the housing (not shown). The projections 30 extend in an opening of the bracket. By means of a bracket cover 34 the projections are fully enclosed. In this manner the filter unit 4 can pivot with relation to the bracket and thus also with relation to the housing. A clamp 36 having two resilient arms 38 is arranged within the housing. It is adapted to clamp the filter unit 4 at an upper part thereof. The clamp 36 ensures that the filter unit 4 is hold in its normal position while at the same time it can be easily moved between the normal position and its maintenance position by the resilient action of the arms 38.

An inlet connection 42 and an outlet connection 41 are provided at the bottom part of the filter unit. These connection are linked to the piping of the water purification device by means of flexible tubes (not shown).

Figure 3 clearly shows that the protrusions are provided at a first end 46 of the filter unit while the cap 28 is provided at an opposite second end 48 of the filter unit. This results that relatively little space is required in the housing to tilt the filter unit. At a certain tilting angle a bottom part of the cilindrical side wall of the filter unit abuts against the bracket and thus prevents further tilting.

At a back wall of the housing preferably mounting brackets or mounting holes are provided for easily mounting the device on a wall.

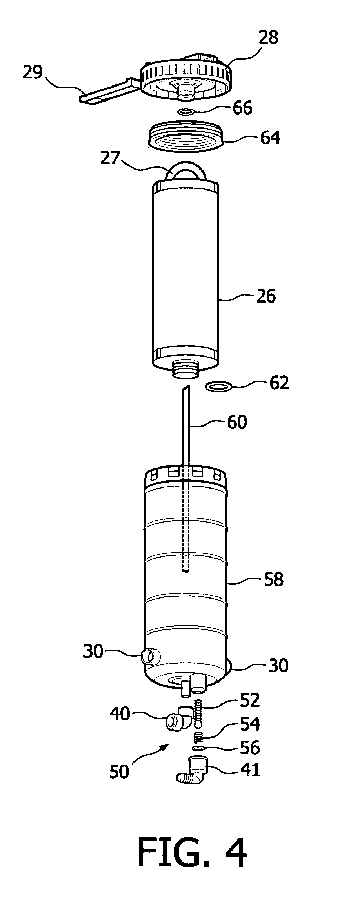

Figure 4 shows an exploded view of the filter unit 4. Next to the parts as illustrated and described above, this figure shows a container 58 accommodating the filter element 26 and an automatic shut off valve 50, comprising a rod 52, a spring 54 and a valve O-ring 56. These components cooperate with the inlet connection to shut of the entry of water as soon as the filter element 26 is removed from the container 58. Together with the flexible tubes as described above this enables to replace the filter element without having to disconnect the inlet and outlet connection of the filter unit.

The screw cap comprises a handle 29, which is slidably arranged at a top surface of the cap. By sliding the handle 29 to the outside of the cap one facilitates unscrewing the cap by increasing the tilting forces that is exerted.

O-rings 64 and 66 are provided to seal the cap 28, while an O-ring 62 seals the outlet of the filter element. The water flows from an outer bottom part of the filter element both in a radial (inwards) and axial (upwards) direction. When the water has reached a certain height in the filter element 26 it finally flows through tube 60 towards the water outlet 40. The tube 60 also functions as ventilation channel for removing excessive air in the filter unit.

The present invention relates to a household water purification device 20 comprising, a housing 22 and water purification means comprising a filter unit 4 accommodated in the housing, which filter unit accommodates a filter element 26 and has a cap 28 for replacing the filter element, wherein the filter unit is moveably arranged with relation to the housing to move the filter unit between a normal position and a maintenance position wherein at least the cap is substantially situated outside the housing. This water purification device 20 enables an easy and swift replacement of the filter element 26 inside the filter unit 4. The invention also relates to a filter unit.

## Claims

1. Water purification device (20) comprising,
- a housing (22);
- water purification means comprising a filter unit (4) accommodated in the housing, which filter unit accommodates a filter element (26) and has a cap (28) for replacing the filter element;
- a piping comprising a water inlet for contaminated water, which inlet is in fluid communication with the water purification means and is connectable to a water supply system, and comprising a water outlet (21) for dispensing purified water, which outlet is in fluid communication with the water purification means,
wherein the filter unit is moveably arranged with relation to the housing to move the filter unit between a normal position and a maintenance position wherein at least the cap is substantially situated outside the housing.

2. Device (20) according to claim 1, wherein the filter unit (4) is pivotably arranged with relation to the housing (22).

3. Device (20) according to claim 2, wherein the housing (22) comprises a bracket (32) and protrusions (30) extending from the filter unit (4) are provided, which protrusions are coupled to the bracket to pivot the filter unit.

4. Device (20) according to claim 2, wherein the filter unit (4) has a first end (46) and an opposite second end (48), and wherein the protrusions (30) are provided at the first end and the cap (28) is provided at the second end.

5. Device (20) according to claim 1, wherein the filter unit (4) is connected to the piping by means of flexible tubes and comprises an automatic shut off valve (50) that shuts of the water supply to the filter unit when removing the filter element (26).

6. Device (20) according to claim 1, wherein two resilient arms (38) are provided that releasably clamp the filter unit (4) for supporting the filter unit in the normal position.

7. Device (20) according to claim 1, wherein the housing (22) comprises at least one panel (24) for accessing the interior of the housing.

8. Device (20) according to claim 1, wherein the water purification means comprise an UV chamber (3) for irradiating the water with UV radiation, the UV chamber being provided upstream of the filter unit (4).

## Patentansprüche

1. Wasserreinigungsvorrichtung (20) mit:
- einem Gehäuse (22);
- Wasserreinigungsmitteln mit einer in dem Gehäuse untergebrachten Filtereinheit (4), die ein Filterelement (26) aufnimmt und eine Kappe (28) zum Austausch des Filterelements aufweist;
- einem Rohrleitungssystem mit einem Wassereinlass für kontaminiertes Wasser, welcher mit den Wasserreinigungsmitteln in Fluidverbindung steht und an ein Wasserversorgungssystem anschließbar ist, sowie mit einem Wasserauslass (21) zur Abgabe von gereinigtem Wasser, welcher mit den Wasserreinigungsmitteln in Fluidverbindung steht,
wobei die Filtereinheit gegenüber dem Gehäuse beweglich angeordnet ist, um die Filtereinheit zwischen einer normalen Position und einer Wartungsposition zu verschieben, wobei sich zumindest die Kappe im Wesentlichen außerhalb des Gehäuses befindet.

2. Vorrichtung (20) nach Anspruch 1, wobei die Filtereinheit (4) gegenüber dem Gehäuse schwenkbar angeordnet ist.

3. Vorrichtung (20) nach Anspruch 2, wobei das Gehäuse (22) eine Halterung (32) umfasst und sich von der Filtereinheit (4) erstreckende Vorsprünge (30) vorgesehen sind, die zum Verschwenken der Filtereinheit an die Halterung gekoppelt sind.

4. Vorrichtung (20) nach Anspruch 2, wobei die Filtereinheit (4) ein erstes Ende (46) und ein gegenüberliegendes, zweites Ende (48) aufweist, und wobei die Vorsprünge (30) an dem ersten Ende vorgesehen sind und die Kappe (28) an dem zweiten Ende angeordnet ist.

5. Vorrichtung (20) nach Anspruch 1, wobei die Filtereinheit (4) mit Hilfe flexibler Rohre mit dem Rohrleitungssystem verbunden ist und ein automatisches Absperrventil (50) umfasst, welches die Wasserzufuhr zu der Filtereinheit sperrt, wenn das Filterelement (26) entfernt wird.

6. Vorrichtung (20) nach Anspruch 1, wobei zwei elastische Arme (38) vorgesehen sind, welche die Filtereinheit (4) lösbar festklemmen, um die Filtereinheit in der normalen Position zu halten.

7. Vorrichtung (20) nach Anspruch 1, wobei das Gehäuse (22) mindestens eine Frontplatte (24) umfasst, um in das Innere des Gehäuses zu gelangen.

8. Vorrichtung (20) nach Anspruch 1, wobei die Wasserreinigungsmittel eine UV-Kammer (3) zum Bestrahlen des Wassers mit UV-Strahlung umfassen, wobei die UV-Kammer vor der Filtereinheit (4) vorgesehen ist.

## Revendications

1. Dispositif de purification d'eau (20) comprenant :
- un logement (22) ;
- un moyen de purification d'eau comprenant une unité de filtre (4) accueillie dans le logement, ladite unité de filtre accueillant un élément de filtre (26) et comprenant un couvercle (28) pour remplacer l'élément de filtre ;
- un tuyau comprenant une entrée d'eau pour l'eau contaminée, ladite entrée étant en communication fluidique avec le moyen de purification d'eau et pouvant être raccordée à un système d'alimentation d'eau, et comprenant une sortie d'eau (21) pour distribuer l'eau purifiée, ladite sortie étant en communication fluidique avec le moyen de purification d'eau,
dans lequel l'unité de filtre est disposée de façon mobile par rapport au logement pour déplacer l'unité de filtre entre une position normale et une position d'entretien dans laquelle au moins le couvercle est sensiblement situé à l'extérieur du logement.

2. Dispositif (20) selon la revendication 1, dans lequel l'unité de filtre (4) est disposée de façon pivotante par rapport au logement (22).

3. Dispositif (20) selon la revendication 2, dans lequel le logement (22) comprend un support (32) et des protubérances (30) s'étendant depuis l'unité de filtre (4), lesdites protubérances étant couplées au support pour faire pivoter l'unité de filtre.

4. Dispositif (20) selon la revendication 2, dans lequel l'unité de filtre (4) comporte une première extrémité (46) et une seconde extrémité (48) opposée, et dans lequel les protubérances (30) sont disposées sur la première extrémité et le couvercle (28) est disposé à la seconde extrémité.

5. Dispositif (20) selon la revendication 1, dans lequel l'unité de filtre (4) est raccordée au tuyau au moyen de tubes flexibles et comprend un robinet d'arrêt automatique (50) qui arrête l'alimentation d'eau à l'unité de filtre quand l'élément de filtre (26) est retiré.

6. Dispositif (20) selon la revendication 1, dans lequel deux bras souples (38) sont disposés pour serrer de façon amovible l'unité de filtre (4) pour supporter l'unité de filtre dans la position normale.

7. Dispositif (20) selon la revendication 1, dans lequel le logement (22) comprend au moins un panneau (24) pour accéder à l'intérieur du logement.

8. Dispositif (20) selon la revendication 1, dans lequel le moyen de purification d'eau comprend une chambre à ultraviolets (3) pour irradier l'eau avec des rayonnements UV, la chambre à ultraviolets étant disposée en amont de l'unité de filtre (4).
